# EUROPEAN PATENT SPECIFICATION

(11) **EP 3 974 094 B1**
(45) Date of publication and mention of the grant of the patent: **10.04.2024**
(21) Application number: 20810498.4
(22) Date of filing: 24.04.2020
(51) Int. Cl.: B23K 9/073, B23K 9/09, B23K 9/095, B23K 9/12, B23K 9/173

(54) **ARC WELDING METHOD AND ARC WELDING DEVICE**
LICHTBOGENSCHWEISSVERFAHREN UND LICHTBOGENSCHWEISSVORRICHTUNG
PROCÉDÉ DE SOUDAGE À L'ARC ET DISPOSITIF DE SOUDAGE À L'ARC

(30) Priority: 22.05.2019 JP 2019096033
(43) Date of publication of application: 30.03.2022
(73) Proprietor: Panasonic Intellectual Property Management Co., Ltd., Osaka-shi, Osaka 540-6207 (JP)
(72) Inventor: MATSUOKA Noriyuki, Osaka-shi, Osaka 540-6207 (JP); SATOU Shun, Osaka-shi, Osaka 540-6207 (JP); KOWA Masaru, Osaka-shi, Osaka 540-6207 (JP); NAKAGAWA Akira, Osaka-shi, Osaka 540-6207 (JP); FUJIWARA Junji, Osaka-shi, Osaka 540-6207 (JP)
(74) Representative: Vigand, Philippe
(86) International application number: PCT/JP2020/017616
(87) International publication number: WO 2020/235294

(56) References cited:
- EP-A1- 3 056 308
- EP-A1- 3 366 401
- WO-A1-2018/079345
- CN-A- 106 552 984
- JP-A- 2012 081 501
- JP-A- 2013 094 840
- JP-A- 2016 147 312
- US-A1- 2015 151 376

## Description

### TECHNICAL FIELD

The technique disclosed herein relates to an arc welding technique.

### BACKGROUND ART

PTL 1 discloses an AC pulse arc welding method in which welding of a base material is performed by alternately repeating a reverse polarity period in which a reverse polarity current is applied and a positive polarity period in which a positive polarity current is applied.

PTL 2 discloses an arc welding method reflecting the preamble of present claim 1. Further art is disclosed by PTL 3.

### Citation List

### Patent Literature

PTL 1: International Publication No. 2010/086933 A
PTL 2: EP 3 056 308
PTL 3: US 2015/151376

### SUMMARY OF THE INVENTION

### Technical problem

It is difficult for arc welding as in PTL 1 to maintain a constant cycle of a welding current (a period from a start point of a reverse polarity period to an end point of a positive polarity period following the reverse polarity period). For example, when a short-circuit occurs between the welding wire and the base material, control for periodically changing the welding current is interrupted from a start of the short-circuit to opening of the short-circuit. That is, time (short-circuit time) from the start of the short-circuit to the opening of the short-circuit is added to the cycle of the welding current. This causes the cycle of the welding current to be non-uniform. As a result, bead appearance may be deteriorated.

Thus, an object of the technique disclosed herein is to provide an arc welding technique capable of preventing nonuniformity of a cycle of a welding current due to a short-circuit between a welding wire and a base material. Solution to problem

A technique disclosed herein relates to an arc welding method in which a welding wire serving as a consumable electrode is fed toward a base material, and a welding current is caused to flow through the welding wire and the base material to alternately repeat a reverse polarity period in which the welding wire serves as a positive electrode and the base material serves as a negative electrode, and a positive polarity period in which the welding wire serves as the negative electrode and the base material serves as the positive electrode, and thus generating an arc between the welding wire and the base material to weld the base material. The arc welding method according to the present invention is defined in the appended claims.

The technique disclosed herein also relates to an arc welding device in which a welding wire serving as a consumable electrode is fed toward a base material by a wire feeder, and a welding current is caused to flow through the welding wire and the base material to alternately repeat a reverse polarity period in which the welding wire serves as a positive electrode and the base material serves as a negative electrode, and a positive polarity period in which the welding wire serves as the negative electrode and the base material serves as the positive electrode, and thus generating an arc between the welding wire and the base material to weld the base material. The arc welding device according to the present invention is defined in the appended claims.

### Advantageous effect of invention

The technique disclosed herein enables preventing nonuniformity of a cycle of the welding current caused by the short-circuit between the welding wire and the base material.

### BRIEF DESCRIPTION OF DRAWINGS

FIG. 1 is a diagram illustrating a configuration of an arc welding device according to an exemplary embodiment.
FIG. 2 is a timing chart for illustrating operation of the arc welding device according to the exemplary embodiment (operation when no short-circuit occurs).
FIG. 3 is a timing chart for illustrating operation of the arc welding device according to the exemplary embodiment (operation when a short-circuit occurs).
FIG. 4 is a timing chart for illustrating operation of an arc welding device according to a modification of the exemplary embodiment (operation when a short-circuit occurs).
FIG. 5 is a diagram illustrating short-circuit standby time in accordance with a kind of material constituting a welding wire and feeding speed Wf of the welding wire.
FIG. 6 is a timing chart for illustrating operation of the arc welding device according to the modification of the exemplary embodiment (operation when a short-circuit occurs).

### DESCRIPTION OF EMBODIMENT

Hereinafter, an exemplary embodiment will be described in detail with reference to the drawings. The same or equivalent portion in the drawings is designated by same reference numeral to eliminate duplicated description.

### (Arc welding system)

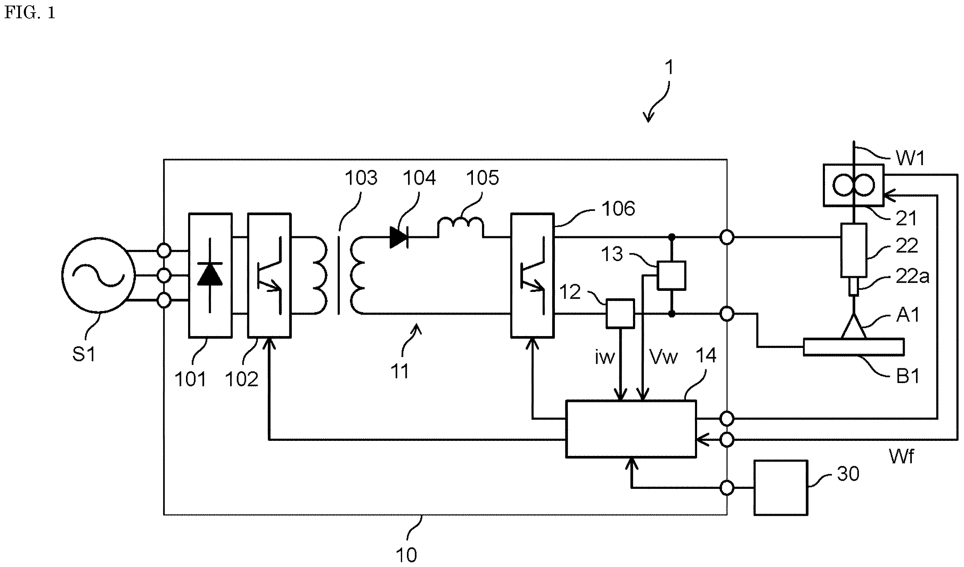

FIG. 1 illustrates a configuration of arc welding system 1 according to the exemplary embodiment. Arc welding system 1 is configured to generate arc A1 between welding wire W1 serving as a consumable electrode and base material B1 to weld base material B 1. In this example, arc welding system 1 includes arc welding device 10, wire feeder 21, welding torch 22, and setting unit 30.

### (Wire feeder and welding torch)

Wire feeder 21 feeds welding wire W1 to welding torch 22. Welding torch 22 holds welding wire W1 such that welding wire W1 fed from wire feeder 21 and base material B1 face each other. Welding torch 22 is provided with welding tip 22a for supplying power from arc welding device 10 to welding wire W1. Wire feeder 21 is provided with a feeding speed detector (not illustrated) that detects feeding speed Wf of welding wire W1. Welding torch 22 is held by a robot (not illustrated). Feeding speed Wf (specifically, a detection signal indicating feeding speed Wf) of welding wire W1 detected by the feeding speed detector is transmitted to controller 14 described later. The robot moves welding torch 22 at a predetermined welding speed along a welding target region predetermined in base material B1.

### (Setting unit)

Setting unit 30 is used for setting welding conditions.

### (Arc welding device)

Arc welding device 10 causes welding current "iw" suitable for welding to flow through welding wire W1 and base material B1 to generate arc A1 between welding wire W1 and base material B1 to weld base material B1. In this example, arc welding device 10 constitutes an AC pulse arc welding machine of a consumable electrode type. Welding current "iw" is controlled such that reverse polarity period P1 and positive polarity period P2 are alternately repeated. In reverse polarity period P1, welding wire W1 serves as a positive electrode, and base material B1 serves as a negative electrode. In positive polarity period P2, welding wire W1 serves as the negative electrode, and base material B1 serves as the positive electrode. Specifically, arc welding device 10 includes power converter 11, welding current detector 12, welding voltage detector 13, and controller 14.

### [Power converter]

Power converter 11 is electrically connected to power source S1, and generates welding voltage Vw suitable for welding by using power supplied from power source S1. Power converter 11 is also electrically connected to welding wire W1 using welding tip 22a of welding torch 22, and is electrically connected to base material B1. Power converter 11 then applies welding voltage Vw across welding wire W1 and base material B1 to cause welding current "iw" to flow through welding wire W1 and base material B1.

In this example, power converter 11 includes first rectifier 101, first switching unit 102, transformer 103, second rectifier 104, reactor 105, and second switching unit 106. First rectifier 101 rectifies output of power source S1. First switching unit 102 adjusts output of first rectifier 101 by switching operation. Transformer 103 converts output of first switching unit 102 into output suitable for welding. Second rectifier 104 rectifies output of transformer 103. Reactor 105 is connected in series with second rectifier 104 and smooths output of second rectifier 104. Second switching unit 106 adjusts output of reactor 105 by switching operation. Output of second switching unit 106 is supplied to welding wire W1 and base material B1 through welding tip 22a of welding torch 22. This causes welding voltage Vw to be applied across welding wire W1 and base material B1, and thus causing welding current "iw" to flow through welding wire W1 and base material B1.

### [Detector]

Welding current detector 12 detects welding current "iw". Welding voltage detector 13 detects welding voltage Vw. Welding current "iw" detected by welding current detector 12 (specifically, a detection signal indicating welding current "iw") and welding voltage Vw detected by welding voltage detector 13 (specifically, a detection signal indicating welding voltage Vw) are transmitted to controller 14.

### [Controller]

Controller 14 transmits a signal between each unit of arc welding device 10 (in this example, first switching unit 102, second switching unit 106, welding current detector 12, and welding voltage detector 13) and a device outside arc welding device 10 (in this example, wire feeder 21 and setting unit 30). Controller 14 controls each unit of arc welding device 10 and the device outside arc welding device 10 based on signals transmitted from each unit of arc welding device 10 and the device outside arc welding device 10. In this example, controller 14 controls first switching unit 102 and second switching unit 106 of arc welding device 10, wire feeder 21, and the robot (not illustrated) that holds welding torch 22. For example, controller 14 includes a processor and a memory that is electrically connected to the processor and stores a program and information for operating the processor.

### [Detection operation]

Next, detection operation of controller 14 will be described. Controller 14 performs operation of detecting a short-circuit, operation of detecting a constriction, and operation of detecting short-circuit opening.

### <Operation of detecting short-circuit (step of detecting short-circuit)>

In the operation of detecting a short-circuit, controller 14 detects a short-circuit between welding wire W1 and base material B1. Specifically, when an absolute value of welding voltage Vw detected by welding voltage detector 13 falls below a predetermined short-circuit occurrence threshold, controller 14 determines that a short-circuit has occurred between welding wire W1 and base material B1. The short-circuit occurrence threshold is set to an absolute value of welding voltage Vw at which it can be considered that a short-circuit occurs between welding wire W1 and base material B1.

### <Operation of detecting constriction (step of detecting constriction)>

In the operation of detecting a constriction, controller 14 detects a constriction having occurred in a droplet formed between welding wire W1 and base material B1. Specifically, when a variation of welding voltage Vw per unit time detected by welding voltage detector 13 exceeds a predetermined constriction threshold, controller 14 determines that a constriction occurs in the droplet formed between welding wire W1 and base material B1. The constriction threshold is set to a variation of welding voltage Vw per unit time at which it can be considered that a constriction occurs in a droplet formed between welding wire W1 and base material B1.

### <Operation of detecting short-circuit opening (step of detecting short-circuit opening)>

In the operation of detecting short-circuit opening, controller 14 detects opening of a short-circuit between welding wire W1 and base material B1. Specifically, when the absolute value of welding voltage Vw detected by welding voltage detector 13 exceeds a predetermined short-circuit opening threshold, controller 14 determines that the short-circuit between welding wire W1 and base material B 1 is opened. The short-circuit opening threshold is set to an absolute value of welding voltage Vw at which it can be considered that the short-circuit between welding wire W1 and base material B1 is opened.

### [Current control]

Controller 14 controls operation of power converter 11 (specifically, operation of first switching unit 102 and second switching unit 106) to control welding current "iw". In this example, controller 14 selectively performs normal current control and short-circuit current control. Controller 14 performs return control as necessary when control is returned to the normal current control from the short-circuit current control.

### <Normal current control>

The normal current control is performed during a period in which a short-circuit between welding wire W1 and base material B1 does not occur. In the normal current control, controller 14 controls welding current "iw" by controlling switching operation of first switching unit 102 and a connection state of second switching unit 106 such that reverse polarity period P1 and positive polarity period P2 are alternately repeated. Controller 14 also controls welding current "iw" by controlling the switching operation of the first switching unit 102 such that welding current "iw" sequentially changes to reverse polarity peak current "ip 1" and reverse polarity base current "ib 1" in reverse polarity period P1, and welding current "iw" sequentially changes to positive polarity peak current "ip2" and positive polarity base current "ib2" in positive polarity period P2. In the normal current control, welding current "iw" has a frequency (output timing of reverse polarity peak current "ip1", reverse polarity base current "ib1", positive polarity peak current "ip2", and positive polarity base current "ib2") that corresponds to a predetermined frequency (output timing).

### <Short-circuit current control>

After a short-circuit between welding wire W1 and base material B 1 is detected in the normal current control, controller 14 terminates the normal current control and starts the short-circuit current control. For example, controller 14 may start the short-circuit current control upon the detection of the short-circuit between welding wire W1 and base material B1. Controller 14 measures elapsed time from a time point at which the short-circuit between welding wire W1 and base material B1 is detected. In the short-circuit current control of this example, short-circuit initial control, current increase control, and current reduction control are performed.

### <<Short-circuit initial control>>

After (immediately after in this example) the short-circuit between welding wire W1 and base material B1 is detected in the normal current control, controller 14 starts short-circuit initial control. In the short-circuit initial control, controller 14 controls welding current "iw" by controlling operation of power converter 11 (specifically, switching operation of first switching unit 102) such that welding current "iw" becomes a short-circuit initial current that is predetermined. The short-circuit initial current is set to reverse polarity short-circuit initial current "is 1" when the short-circuit between welding wire W1 and base material B1 is detected in reverse polarity period P1, and is set to positive polarity short-circuit initial current "is2" when the short circuit between welding wire W1 and base material B1 is detected in positive polarity period P2. In the short-circuit initial control, second switching unit 106 is continuously maintained in a conductive state.

### <<Current increase control (step of increasing current)>>

After (immediately after in this example) a predetermined short-circuit standby time elapses from a time point at which the short-circuit between welding wire W1 and base material B1 is detected (i.e., a time point at which the short-circuit initial control is started), controller 14 terminates the short-circuit initial control and starts the current increase control. For example, controller 14 may start the current increase control upon the elapse of the short-circuit standby time. In the current increase control, controller 14 controls welding current "iw" by controlling operation of power converter 11 (specifically, switching operation of first switching unit 102) such that welding current "iw" increases in absolute value at a predetermined rate of current increase. In the short-circuit initial control, second switching unit 106 is continuously maintained in the conductive state. The short-circuit standby time is preferably set to, for example, 100 psec or more and 3000 psec or less. Setting of the short-circuit standby time will be described later in detail.

### <<Current reduction control (step of reducing current)>>

After (immediately after in this example) the current increase control is started and then a constriction having occurred in a droplet formed between welding wire W1 and base material B 1 is detected, controller 14 terminates the current increase control and starts the current reduction control. For example, controller 14 may start the current reduction control upon the detection of the constriction. In the current reduction control, controller 14 controls welding current "iw" by controlling operation of power converter 11 such that welding current "iw" sharply decreases in absolute value. Specifically, controller 14 sharply reduces the absolute value of welding current "iw" by switching second switching unit 106 from the conductive state to an interrupted state.

### <Return control>

After (immediately after in this example) the short-circuit current control is started and opening of the short-circuit between welding wire W1 and base material B1 is detected, controller 14 terminates the short-circuit current control and performs the return control as necessary, and then starts the normal current control. For example, controller 14 may start the return control upon the detection of the opening of the short-circuit between welding wire W1 and base material B1. The return control is performed to form a molten mass for next droplet transfer. In the return control, controller 14 controls welding current "iw" by controlling operation of power converter 11 (specifically, switching operation of first switching unit 102) such that welding current "iw" becomes a predetermined current. In the return control, second switching unit 106 is continuously maintained in the conductive state.

### [Feeding speed control]

Controller 14 controls operation of wire feeder 21 to control feeding speed Wf of welding wire W1. In this example, controller 14 performs feeding speed change control and feeding speed return control.

### <Feeding speed change control (step of changing feeding speed)>

Controller 14 performs the feeding speed change control after the short-circuit between welding wire W1 and base material B1 is detected in the normal current control. In this example, controller 14 performs the feeding speed change control after the current increase control is started in the short-circuit current control (specifically, at the same time as the start of the current increase control). For example, controller 14 may start the current increase control upon the elapse of the short-circuit standby time. In the feeding speed change control, controller 14 controls feeding speed Wf of welding wire W1 by controlling wire feeder 21 such that feeding speed Wf of welding wire W1 changes from first feeding speed Wf1 to second feeding speed Wf2.

First feeding speed Wf1 has a positive value when a speed of welding wire W1 in a direction toward base material B1 is defined as positive. That is, when feeding speed Wf of welding wire W1 is set to first feeding speed Wf1, welding wire W1 is fed in a forward feeding direction that is the direction toward base material B1.

Second feeding speed Wf2 is a feeding speed that is on a negative side from first feeding speed Wf1 when the speed in the direction toward base material B1 is defined as positive. When second feeding speed Wf2 has a positive value (a positive value smaller than first feeding speed Wf1) and feeding speed Wf of welding wire W1 is set to second feeding speed Wf2, welding wire W1 supplied in the forward feeding direction is decelerated. When second feeding speed Wf2 is zero and feeding speed Wf of welding wire W1 is set to second feeding speed Wf2, feeding of welding wire W1 is stopped. When second feeding speed Wf2 has a negative value and feeding speed Wf of welding wire W1 is set to second feeding speed Wf2, welding wire W1 is returned in a reverse feeding direction (a reverse direction of the forward feeding direction) away from base material B1.

### <Feeding speed return control (step of returning feeding speed)>

Controller 14 performs the feeding speed return control after (immediately after in this example) the opening of the short-circuit between welding wire W1 and base material B1 is detected in the short-circuit current control. For example, controller 14 may start the feeding speed return control upon the detection of the opening of the short-circuit between welding wire W1 and base material B1. In the feeding speed return control, controller 14 controls feeding speed Wf of welding wire W1 by controlling wire feeder 21 such that feeding speed Wf of welding wire W1 changes from second feeding speed Wf2 to first feeding speed Wf1.

### [Welding speed control]

Controller 14 also controls movement speed of welding torch 22 (i.e., welding speed) by controlling operation of the robot (not illustrated) that holds welding torch 22.

### [Operation of arc welding device (arc welding method)]

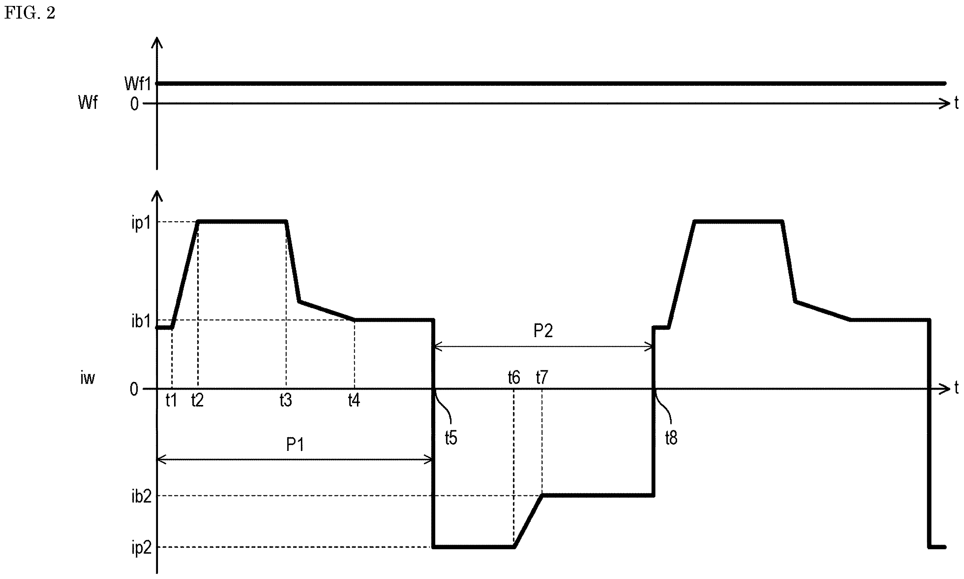

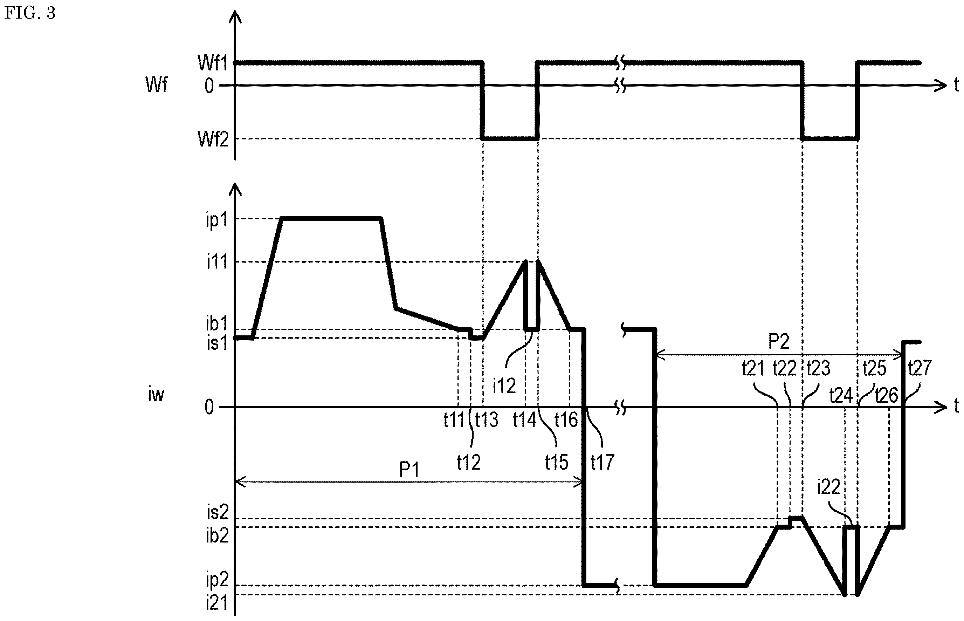

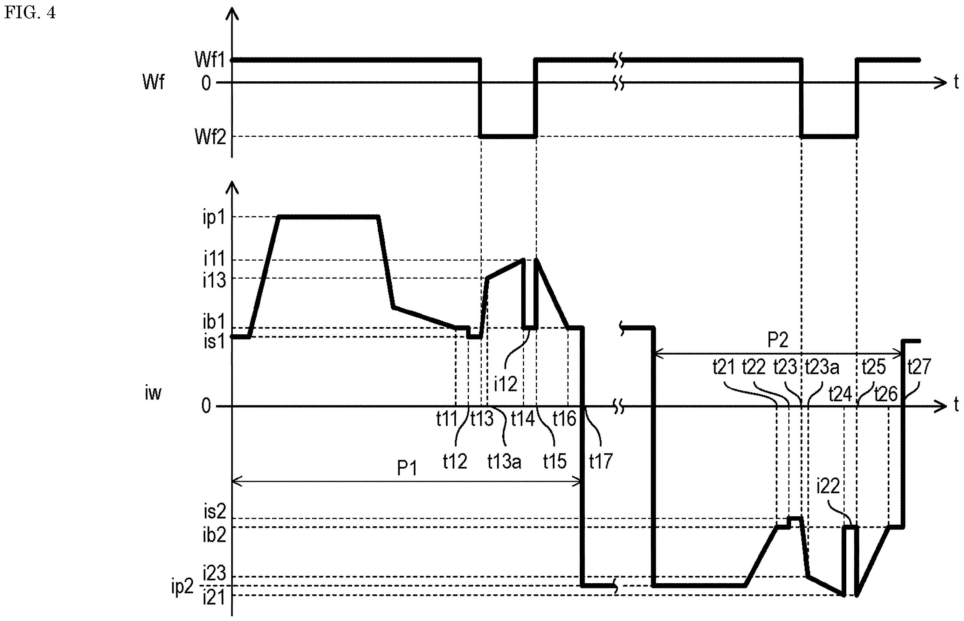

Next, operation of arc welding device 10 according to the exemplary embodiment will be described with reference to FIGS. 2 and 3. In FIG. 3, and FIG. 4 described later, a waveform of welding current "iw" is partially eliminated in a period from time point t17 to time point t21 for the sake of visibility of the drawings. The short-circuit between welding wire W1 and base material B1 does not necessarily occur periodically. Examples of a cycle include a cycle in which a short-circuit occurs between welding wire W1 and base material B1, and a cycle in which no short-circuit occurs between welding wire W1 and base material B1. Welding current iw has a waveform in the period from time point t17 to time point t21 in FIG. 3 (or FIG. 4) that coincides with the waveform as in FIG. 2 (specifically, the waveform after time point t5 in FIG. 2), for example.

### <Operation when no short-circuit occurs>

First, with reference to FIG. 2, operation of arc welding device 10 when no short-circuit between welding wire W1 and base material B1 occurs will be described. In the example of FIG. 2, no short-circuit between welding wire W1 and base material B1 is detected, and only the normal current control is performed. Feeding speed Wf of welding wire W1 is continuously maintained constant at first feeding speed Wf1.

In a period from time point t1 to time point t5 in FIG. 2 (reverse polarity period P1), welding current "iw" is controlled such that welding wire W1 serves as a positive electrode and base material B1 serves as a negative electrode. Welding current "iw" gradually increases in absolute value from reverse polarity base current "ib1" toward reverse polarity peak current "ip1" in a period from time point t1 to time point t2, and is maintained at reverse polarity peak current "ip 1" in a period from time point t2 to time point t3. Then, welding current "iw" gradually decreases in absolute value from reverse polarity peak current "ip 1" toward reverse polarity base current "ib1" in a period from time point t3 to time point t4, and is maintained at reverse polarity base current "ib1" in a period from time point t4 to time point t5. During reverse polarity period P1, the feeding speed of welding wire W1 is maintained at first feeding speed Wf1.

At time point t5 in FIG. 2, reverse polarity period P1 is switched to positive polarity period P2, and welding current "iw" changes from reverse polarity base current "ib1" to positive polarity peak current "ip2".

In a period (positive polarity period P2) from time point t5 to time point t8 in FIG. 2, welding current "iw" is controlled such that welding wire W1 serves as the negative electrode and base material B 1 serves as the positive electrode. Welding current "iw" is maintained at positive polarity peak current "ip2" in a period from time point t5 to time point t6. Then, welding current "iw" gradually decreases in absolute value from positive polarity peak current "ip2" toward positive polarity base current "ib2" in a period from time point t6 to time point t7, and is maintained at positive polarity base current "ib2" in a period from time point t7 to time point t8. During positive polarity period P2, the feeding speed of welding wire W1 is maintained at first feeding speed Wf1.

### <Operation when short-circuit occurs>

Next, with reference to FIG. 3, operation of arc welding device 10 when a short-circuit between welding wire W1 and base material B1 occurs will be described. In the example of FIG. 3, the short-circuit between welding wire W1 and base material B1 is detected at time point t12. At time point t14, a constriction having occurred in a droplet formed between welding wire W1 and base material B1 is detected. At time point t15, the opening of the short-circuit between welding wire W1 and base material B1 is detected. Time point t13 is a time point after the short-circuit standby time elapses from time point t12. That is, a period from time point t12 to time point t13 has a time length corresponding to the short-circuit standby time. In the example of FIG. 3, the short-circuit between welding wire W1 and base material B1 is detected at time point t22. At time point t24, a constriction having occurred in a droplet formed between welding wire W1 and base material B1 is detected. At time point t25, opening of the short-circuit between welding wire W1 and base material B1 is detected. Time point t23 is a time point after the short-circuit standby time elapses from time point t22. That is, a period from time point t22 to time point t23 has a time length corresponding to the short-circuit standby time.

During a period from time point t11 to time point t12, the normal current control is continued. When the short-circuit between welding wire W1 and base material B1 is detected at time point t12, the normal current control is terminated and the short-circuit initial control is started. This causes welding current "iw" to become reverse polarity short-circuit initial current "is1". Then, the short-circuit initial control is continued in the period from time point t12 to time point t13 (time point after elapse of the short-circuit standby time from time point t12). This causes welding current "iw" to be maintained at reverse polarity short-circuit initial current "is1" during the period from time point t12 to time point t13. Reverse polarity short-circuit initial current "is1" may be a current lower than reverse polarity base current "ib 1" (a current smaller in absolute value than reverse polarity base current "ib 1"), or may be the same current as reverse polarity base current "ib1".

At time point t13 (when the short-circuit standby time elapses from time point t12), the short-circuit initial control is terminated and the current increase control is started, and the current increase control is continued in a period from time point t13 to time point t14. This causes welding current "iw" to gradually increase in absolute value from reverse polarity short-circuit initial current "is1" at the predetermined rate of current increase.

When the current increase control is started at time point t13, the feeding speed change control is performed, and feeding speed Wf of welding wire W1 is switched from first feeding speed Wf1 to second feeding speed Wf2. Second feeding speed Wf2 may be maintained until the feeding speed return control is performed after the feeding speed change control has been performed. Second feeding speed Wf2 may be temporally constant or may temporally change.

When a constriction having occurred in a droplet formed between welding wire W1 and base material B1 is detected at time point t14, the current increase control is terminated, and the current reduction control is started. This causes welding current "iw" to sharply change from first reverse polarity current "i11" toward second reverse polarity current "i12" (a current lower than first reverse polarity current "i11") at time point t14. That is, welding current "iw" sharply decreases in absolute value. Then, the current reduction control is continued during a period from time point t14 to time point t15. This causes welding current "iw" to be maintained at second reverse polarity current "i12" during the period from time point t14 to time point t15. Second reverse polarity current "i12", which is a lower limit of welding current "iw" in the current reduction control, may be higher than reverse polarity base current "ib1" (a current larger in absolute value than reverse polarity base current "ib1"), may be the same as reverse polarity base current "ib1", or may be lower than reverse polarity base current "ib1".

When the opening of the short-circuit between welding wire W1 and base material B1 is detected at time point t15, the current reduction control is terminated and the return control is started, and the return control is continued during a period from time point t15 to time point t16. This causes a molten mass for next droplet transfer to be formed.

When the opening of the short-circuit between welding wire W1 and base material B1 is detected at time point t15, the feeding speed return control is also performed, and feeding speed Wf of welding wire W1 is switched from second feeding speed Wf2 to first feeding speed Wf1. First feeding speed Wf1 may be maintained until the feeding speed change control is performed after the feeding speed return control has been performed. First feeding speed Wf1 may be temporally constant or may temporally change.

At time point t16, the return control is terminated, and the normal current control is started. This causes welding current "iw" to be maintained at reverse polarity base current "ib1". Then, at time point t17, reverse polarity period P1 is switched to positive polarity period P2, and welding current "iw" changes from reverse polarity base current "ib1" to positive polarity peak current "ip2".

During a period from time point t21 to time point t22, the normal current control is continued. When the short-circuit between welding wire W1 and base material B1 is detected at time point t22, the normal current control is terminated and the short-circuit initial control is started. This causes welding current "iw" to become positive polarity short-circuit initial current "is2". Then, the short-circuit initial control is continued in the period from time point t22 to time point t23 (a time point after elapse of the short-circuit standby time from time point t22). This causes welding current "iw" to be maintained at positive polarity short-circuit initial current "is2" during the period from time point t22 to time point t23. Positive polarity short-circuit initial current "is2" may be a current higher than positive polarity base current "ib2" (a current smaller in absolute value than positive polarity base current "ib2"), or may be the same current as positive polarity base current "ib2".

At time point t23 (when the short-circuit standby time elapses from time point t22), the short-circuit initial control is terminated and the current increase control is started, and the current increase control is continued in a period from time point t23 to time point t24. This causes welding current "iw" to gradually increase in absolute value from positive polarity short-circuit initial current "is2" at the predetermined rate of current increase.

When the current increase control is started at time point t23, the feeding speed change control is performed, and feeding speed Wf of welding wire W1 is switched from first feeding speed Wf1 to second feeding speed Wf2. Second feeding speed Wf2 may be maintained until the feeding speed return control is performed after the feeding speed change control has been performed. Second feeding speed Wf2 may be temporally constant or may temporally change.

When a constriction having occurred in a droplet formed between welding wire W1 and base material B1 is detected at time point t24, the current increase control is terminated, and the current reduction control is started. This causes welding current "iw" to sharply change from first positive polarity current "i21" at time point t24 toward second positive polarity current "i22" (a current higher than first positive polarity current "i21"). That is, welding current "iw" sharply decreases in absolute value. Then, the current reduction control is continued during a period from time point t24 to time point t25. This causes welding current "iw" to be maintained at second positive polarity current "i22" during the period from time point t24 to time point t25. Second positive polarity current "i22", which is an upper limit of welding current "iw" in the current reduction control, may be lower than positive polarity base current "ib2" (a current larger in absolute value than positive polarity base current "ib2"), may be the same as positive polarity base current "ib2", or may be higher than positive polarity base current "ib2".

When the opening of the short-circuit between welding wire W1 and base material B 1 is detected at time point t25, the current reduction control is terminated and the return control is started, and the return control is continued during a period from time point t25 to time point t26. This causes a molten mass for next droplet transfer to be formed.

When the opening of the short-circuit between welding wire W1 and base material B 1 is detected at time point t25, the feeding speed return control is also performed, and feeding speed Wf of welding wire W1 is switched from second feeding speed Wf2 to first feeding speed Wf1. First feeding speed Wf1 may be maintained until the feeding speed change control is performed after the feeding speed return control has been performed. First feeding speed Wf1 may be temporally constant or may temporally change.

At time point t26, the return control is terminated, and the normal current control is started. This causes welding current "iw" to be maintained at positive polarity base current "ib2". Then, at time point t27, positive polarity period P2 is switched to reverse polarity period P1, and welding current "iw" changes from positive polarity base current "ib2" to reverse polarity peak current "ip 1".

### [Effects of exemplary embodiment]

As described above, after the short-circuit between welding wire W1 and base material B1 is detected, feeding speed Wf of welding wire W1 can be changed to the negative side from first feeding speed Wf1 by performing the feeding speed change control of changing feeding speed of welding wire W1 from first feeding speed Wf1 (feeding speed with a positive value in the forward feeding direction) to second feeding speed Wf2 (feeding speed on the negative side from first feeding speed Wf1).

Specifically, when second feeding speed Wf2 has a positive value (a positive value smaller than first feeding speed Wf1), welding wire W1 to be fed toward base material B1 can be decelerated. That is, the feeding speed of welding wire W1 to be fed toward base material B1 can be reduced less than first feeding speed Wf1. When second feeding speed Wf2 is zero, the feeding of welding wire W1 can be stopped. When second feeding speed Wf2 has a negative value, welding wire W1 can be fed in the reverse feeding direction away from base material B1.

As described above, when feeding speed Wf of welding wire W1 is changed to the negative side from first feeding speed Wf1, a distance between welding wire W1 and base material B1 can be increased, and thus enabling the opening of the short-circuit between welding wire W1 and base material B1 to be promoted. This enables shortening time (short-circuit time) from the start of the short-circuit to the opening of the short-circuit, so that a cycle of welding current "iw" (a period from a start point of the reverse polarity period to an end point of the positive polarity period following the reverse polarity period) is likely to be maintained constant. Thus, nonuniformity of the cycle of welding current "iw" caused by the short-circuit between welding wire W1 and base material B1 can be prevented.

When second feeding speed Wf2 is set to a negative value and feeding speed Wf of welding wire W1 is changed from first feeding speed Wf1 (feeding speed with a positive value in the forward feeding direction) to second feeding speed Wf2 (feeding speed with a negative value in the reverse feeding direction), welding wire W1 can be fed in a direction in which welding wire W1 is away from base material B1. This enables welding wire W1 to be reliably separated from base material B1, so that buckling of welding wire W1 (particularly, welding wire W1 made of aluminum) due to contact between welding wire W1 and base material B1 can be prevented from occurring.

When the feeding speed change control is performed after the current increase control is started (i.e., after the short-circuit standby time elapses from the time point at which the short-circuit between welding wire W1 and base material B 1 is detected), performance of the feeding speed change control can be eliminated when a contact state of the short-circuit between welding wire W1 and base material B1 is relatively mild and the short-circuit time, which is the time from the start of the short-circuit to the opening of the short-circuit, is relatively short (e.g., immediately after the start of the short-circuit). This enables the feeding speed change control to be effectively performed.

Specifically, when the short-circuit time, which is the time from the start of the short-circuit to the opening of the short-circuit, is shorter than the short-circuit standby time and the feeding speed change control is not performed, shortage of a target amount of feeding of welding wire W1 due to performance of the feeding speed change control can be prevented. When the short-circuit time, which is the time from the start of the short-circuit to the opening of the short-circuit, is longer than the short-circuit standby time and the feeding speed change control is performed, the opening of the short-circuit between welding wire W1 and base material B1 can be promoted.

The short-circuit time is desirably as short as possible. The reason for this is as follows. For example, a long arc length at high welding speed tends to cause an undercut. Thus, when voltage is lowered to shorten an arc length and cause a light short-circuit, an effect of preventing an undercut can be expected. However, when the short-circuit time increases, a cycle of a current waveform becomes irregular to cause welding to be unstable. Thus, when a short-circuit is generated, the short-circuit time is preferably short.

When timing of the short-circuit opening is before the elapse of the short-circuit standby time and the short-circuit opening can be performed only by supplying a welding current, the feeding speed change control is not performed. The reason is that when unnecessary feeding speed change control is performed, the target amount of feeding of welding wire W1 decreases. Thus, no feeding speed change control is preferably performed when the short-circuit is opened before the elapse of the short-circuit standby time, and the feeding speed change control is preferably performed when the short-circuit is not opened before the elapse of the short-circuit standby time.

When the feeding speed return control of returning feeding speed Wf of welding wire W1 from second feeding speed Wf2 to first feeding speed Wf1 is performed after the opening of the short-circuit between welding wire W1 and base material B1 is detected, feeding speed Wf of welding wire W1 can be returned to original speed. This enables preventing insufficient feeding of welding wire W1 due to a decrease in feeding speed Wf of welding wire W1.

### (First modification of exemplary embodiment)

Arc welding device 10 of a first modification of the exemplary embodiment is different from arc welding device 10 of the exemplary embodiment in details of the current increase control. Other configurations and operations of arc welding device 10 of the first modification of the exemplary embodiment are similar to those of arc welding device 10 of the exemplary embodiment.

In the first modification of the exemplary embodiment, as illustrated in FIG. 4, the current increase control includes first current increase control and second current increase control to be performed after the first current increase control. In the example of FIG. 4, the first current increase control is continued during a period from time point t13 to time point t13a, and the second current increase control is continued during a period from time point t13a to time point t14. The first current increase control is continued during a period from time point t23 to time point t23a, and the second current increase control is continued during a period from time point t23a to time point t24. Control in other periods in the example of FIG. 4 is similar to the control illustrated in FIG. 3.

### [First current increase control (first step of increasing current)]

Controller 14 performs the first current increase control after (immediately after in this example) a predetermined short-circuit standby time elapses from a time point at which a short-circuit between welding wire W1 and base material B 1 is detected in normal current control (i.e., a time point at which short-circuit initial control is started). In the first current increase control, controller 14 controls welding current "iw" by controlling operation of power converter 11 (specifically, switching operation of first switching unit 102) such that welding current "iw" increases in absolute value at a predetermined first rate of current increase. In the first current increase control, second switching unit 106 is continuously maintained in the conductive state.

In the example of FIG. 4, the first current increase control is continued in the period from time point t13 to time point t13a, and welding current "iw" gradually increases from reverse polarity short-circuit initial current "is1" at the first rate of current increase. That is, welding current "iw" gradually increases in absolute value. The first current increase control is continued in the period from time point t23 to time point t23a, and welding current "iw" gradually decreases from positive polarity short-circuit initial current "is2" at the first rate of current increase. That is, welding current "iw" gradually increases in absolute value.

### [Second current increase control (second step of increasing current)]

After the first current increase control, controller 14 performs the second current increase control. Specifically, controller 14 performs the second current increase control after welding current "iw" reaches a predetermined switching current in the first current increase control (immediately after welding current "iw" reaches third reverse polarity current "i13" or third positive polarity current "i23" in the example of FIG. 4). For example, controller 14 may start the second current increase control when detecting welding current "iw" that reaches the switching current. In the second current increase control, controller 14 controls welding current "iw" by controlling operation of power converter 11 (specifically, switching operation of first switching unit 102) such that welding current "iw" increases in absolute value at a predetermined second rate of current increase, being lower than the first rate of current increase. In the second current increase control, second switching unit 106 is continuously maintained in the conductive state.

In the example of FIG. 4, the second current increase control is continued during the period from time point t13a to time point t14, and welding current "iw" gradually increases from third reverse polarity current "i13" at the second rate of current increase. That is, welding current "iw" gradually increases in absolute value. The second current increase control is continued in the period from time point t23a to time point t24, and welding current "iw" gradually decreases from third positive polarity current "i23" at the second rate of current increase. That is, welding current "iw" gradually increases in absolute value.

### [Feeding speed change control]

In the first modification of the exemplary embodiment, the feeding speed change control may be performed after (immediately after in this example) the second current increase control is started. That is, controller 14 may control the operation of wire feeder 21 such that wire feeding speed Wf changes from first feeding speed Wf1 to second feeding speed Wf2 after the start of the second current increase control. For example, controller 14 may perform the feeding speed change control when welding current "iw" reaches the switching current.

### [Effects of first modification of exemplary embodiment]

As described above, when the feeding speed change control is performed after the first current increase control has been started (after the short-circuit standby time elapses from a time point at which the short-circuit between welding wire W1 and base material B 1 is detected), performance of the feeding speed change control can be eliminated when a contact state of the short-circuit between welding wire W1 and base material B1 is relatively mild and time (short-circuit time) from a start of the short-circuit to opening of the short-circuit is relatively short. This enables the feeding speed change control to be effectively performed.

### (Second modification of exemplary embodiment)

Arc welding device 10 of a second modification of the exemplary embodiment is different from arc welding device 10 of the exemplary embodiment in timing of feeding speed change control. Other configurations and operations of arc welding device 10 of the second modification of the exemplary embodiment are similar to those of arc welding device 10 of the exemplary embodiment.

In the second modification of the exemplary embodiment, the feeding speed change control is performed after (e.g., immediately after) current reduction control is started. That is, controller 14 controls operation of wire feeder 21 such that wire feeding speed Wf changes from first feeding speed Wf1 to second feeding speed Wf2 after the current reduction control is started. For example, controller 14 may perform the feeding speed change control upon detection of a constriction generated in a droplet formed between welding wire W1 and base material B 1.

### [Effects of second modification of exemplary embodiment]

As described above, when the feeding speed change control is performed after the current reduction control has been started (after short-circuit standby time elapses from a time point at which a short-circuit between welding wire W1 and base material B 1 is detected), performance of the feeding speed change control can be eliminated when a contact state of the short-circuit between welding wire W1 and base material B1 is relatively mild and time (short-circuit time) from a start of the short-circuit to opening of the short-circuit is relatively short. This enables the feeding speed change control to be effectively performed.

### (Third modification of exemplary embodiment)

Arc welding device 10 of a third modification of the exemplary embodiment is different from arc welding device 10 of the exemplary embodiment in operation of controller 14. Other configurations and operations of arc welding device 10 of the third modification of the exemplary embodiment are similar to those of arc welding device 10 of the exemplary embodiment.

### [Operation of integrating power (step of integrating power)]

In the third modification of the exemplary embodiment, controller 14 performs operation of integrating power instead of operation of detecting a constriction. In the operation of integrating power, controller 14 derives an integrated power value obtained by integrating power supplied to welding wire W1 and base material B1 from a time point at which a short-circuit between welding wire W1 and base material B1 is detected. Power to be supplied to welding wire W1 and base material B1 can be calculated based on the product of welding current "Ia" and welding voltage Vw.

### [Current reduction control (step of reducing current)]

In the third modification of the exemplary embodiment, controller 14 performs current reduction control based on the integrated power value derived by the operation of integrating power instead of a constriction of a droplet detected by the operation of detecting a constriction. Specifically, controller 14 starts current increase control, and then starts the operation of integrating power. Controller 14 determines whether the integrated power value is larger than a predetermined integrated power threshold. Controller 14 starts the current reduction control after (e.g., immediately after) the integrated power value reaches the integrated power threshold. The integrated power threshold is set to an integrated power value that can be considered as a value immediately before the short-circuit between welding wire W1 and base material B1 is opened. The predetermined integrated power threshold may be a fixed value. The fixed value may be determined for each welding condition.

### [Feeding speed change control]

In the third modification of the exemplary embodiment, the feeding speed change control is performed after (e.g., immediately after) the current increase control is started after elapse of short-circuit standby time. That is, controller 14 controls operation of wire feeder 21 such that wire feeding speed Wf changes from first feeding speed Wf1 to second feeding speed Wf2 after the current increase control is started.

### [Effects of third modification of exemplary embodiment]

As described above, when the current reduction control is performed based on the integrated power value obtained by integrating power supplied to welding wire W1 and base material B1 from a time point at which the short-circuit between welding wire W1 and base material B1 is detected, the current reduction control can be more accurately performed immediately before opening of the short-circuit between welding wire W1 and base material B1 as compared with when the current reduction control is performed based on whether there is a constriction in a droplet formed between welding wire W1 and base material B1.

Specifically, for example, when welding is performed on common base material B1 or base material B1 on a common jig, which is electrically connected, using a plurality of arc welding devices 10, disturbance such as noise may occur due to influence of another welding. When welding wire W1 is made of a material having a low resistance value and containing aluminum or copper, voltage change may decrease. Such a case causes accurate detection of voltage to be difficult, so that a constriction is less likely to be accurately detected. In contrast, when the current reduction control is performed based on an integrated power value, the current reduction control can be accurately performed immediately before the opening of the short-circuit between welding wire W1 and base material B1 even in the above case.

When the feeding speed change control is performed after the current increase control has been started (i.e., after the short-circuit standby time elapses from the time point at which the short-circuit between welding wire W1 and base material B1 is detected), performance of the feeding speed change control can be eliminated when a contact state of the short-circuit between welding wire W1 and base material B 1 is relatively mild and time (short-circuit time) from a start of the short-circuit to opening of the short-circuit is relatively short. This enables the feeding speed change control to be effectively performed.

### (Fourth modification of exemplary embodiment)

Arc welding device 10 of a fourth modification of the exemplary embodiment is different from arc welding device 10 of the exemplary embodiment in timing of feeding speed change control. Other configurations and operations of arc welding device 10 of the fourth modification of the exemplary embodiment are similar to those of arc welding device 10 of the exemplary embodiment.

In the fourth modification of the exemplary embodiment, the feeding speed change control is performed after a predetermined short-circuit standby time elapses from a time point at which a short-circuit between welding wire W1 and base material B1 is detected. That is, controller 14 controls operation of wire feeder 21 such that wire feeding speed Wf changes from first feeding speed Wf1 to second feeding speed Wf2 after (e.g., immediately after) the short-circuit standby time elapses from the time point at which the short-circuit between welding wire W1 and base material B1 is detected.

### [Effects of fourth modification of exemplary embodiment]

As described above, when the feeding speed change control is performed after the short-circuit standby time elapses from a time point at which the short-circuit between welding wire W1 and base material B1 is detected, performance of the feeding speed change control can be eliminated when a contact state of the short-circuit between welding wire W1 and base material B1 is relatively mild and time (short-circuit time) from a start of the short-circuit to opening of the short-circuit is relatively short. This enables the feeding speed change control to be effectively performed.

The short-circuit standby time may be set in accordance with characteristics (material, diameter, and the like) of welding wire W1, or may be set in accordance with a current range of welding current "iw". For example, the short-circuit standby time may be set to an optimum time for each material of welding wire W1, or may be set to an optimum time for each current range of welding current "iw". This kind of optimum time of the short-circuit standby time can be obtained by an experiment or the like.

### (Other exemplary embodiments)

In the above description, a gradient (rate of increase) of welding current "iw" in the current increase control may be set in accordance with the characteristics (material, diameter, and the like) of welding wire W1, the current range of welding current "iw", demand of a customer, and the like. For example, when reduction of spatters is more strongly required than welding stability, the gradient of welding current "iw" in the current increase control is preferably reduced. For example, when welding current "iw" in the current increase control has a normal gradient of "100 A/ms" and the reduction of spatters is more strongly required than the welding stability, the gradient of welding current "iw" in the current increase control may be set to a gradient (e.g., 10 A/ms) smaller than the normal gradient, or the gradient of welding current "iw" in the current increase control may be set to zero to eliminate the current increase control. However, such a case does not allow short-circuit opening due to Joule heating to be expected, so that second feeding speed Wf2 is preferably set to a negative value (reverse feeding) to promote the short-circuit opening. In particular, when the current increase control is eliminated, second feeding speed Wf2 preferably has magnitude (absolute value) that is 1.5 times or more as large as magnitude of first feeding speed Wf1 being a normal feeding speed.

In the above description, second feeding speed Wf2 may increase negatively as first feeding speed Wf1 increases positively.

When a short-circuit occurs between welding wire W1 and base material B1 as first feeding speed Wf1 increases positively, welding wire W1 and base material B1 are likely to come into close contact with each other. As second feeding speed Wf2 increases negatively, welding wire W1 is quickly separated from base material B1. Thus, when second feeding speed Wf2 is increased negatively as first feeding speed Wf1 increases positively, welding wire W1 can be effectively separated from base material B1 when the short-circuit between welding wire W1 and base material B1 occurs.

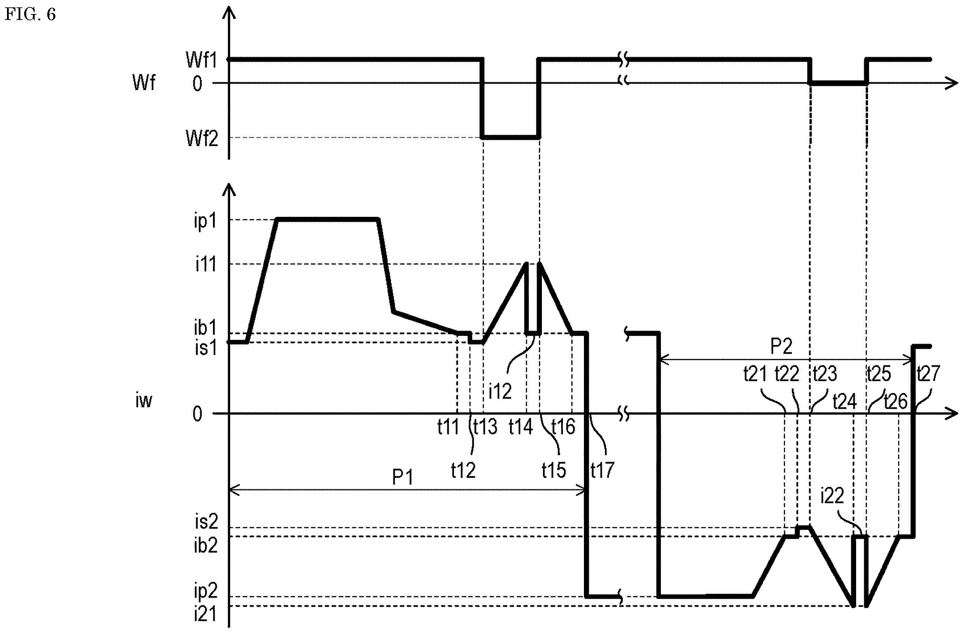

As illustrated in FIG. 6, second feeding speed Wf2 may be a first value when the feeding speed change control is performed in reverse polarity period P1, and may be a second value between first feeding speed Wf1 and the first value when the feeding speed change control is performed in positive polarity period P2. The first value may be a positive value, zero, or a negative value. For example, the first value of second feeding speed Wf2 may be a negative value when the feeding speed change control is performed in reverse polarity period P1, and the second value may be zero or a positive value when the feeding speed change control is performed in positive polarity period P2.

In reverse polarity period P1, welding wire W1 is relatively less likely to be melted, and a distance between welding wire W1 and base material B1 is less likely to be increased when a short circuit occurs between welding wire W1 and base material B1. Thus, when the feeding speed change control (control for changing feeding speed of welding wire W1 from first feeding speed Wf1 to second feeding speed Wf2) is performed in reverse polarity period P1, setting second feeding speed Wf2 to a negative value enables welding wire W1 to be reliably separated from base material B1 when the feeding speed change control is performed in reverse polarity period P1. In contrast, in positive polarity period P2, welding wire W1 is relatively likely to be melted, and a distance between welding wire W1 and base material B1 is likely to be increased when a short circuit occurs between welding wire W1 and base material B1. Power consumption (e.g., power consumption of wire feeder 21) required to switch the feeding speed of welding wire W1 tends to decrease more when second feeding speed Wf2 is zero (i.e., when feeding of welding wire W1 is stopped) and when second feeding speed Wf2 is in positive value (i.e., when welding wire W1 fed toward the base material B1 is decelerated) than when second feeding speed Wf2 is in negative value (i.e., when welding wire W1 is returned in a direction away from base material B1). Thus, when the feeding speed change control is performed in positive polarity period P2, setting second feeding speed Wf2 to zero or a positive value enables reducing the power consumption required to switch the feeding speed of welding wire W1.

In the above description, second feeding speed Wf2 may be set in accordance with a kind of material constituting welding wire W1.

For example, when welding wire W1 is made of a material having a relatively low resistance value (hereinafter, referred to as a "low-resistance material") such as aluminum, an aluminum alloy, copper, or a copper alloy, welding wire W1 has a low resistance value, and thus welding wire W1 is less likely to generate Joule heat even when a welding current is applied to welding wire W1, and heat input is less likely to enter welding wire W1. Thus, even when the welding current is continuously applied to welding wire W1, a tip of welding wire W1 is less likely to be melted, and thus buckling due to contact between welding wire W1 and base material B 1 is likely to occur in welding wire W1. Thus, when welding wire W1 is made of a low-resistance material, welding wire W1 is preferably fed in a reverse feeding direction away from base material B 1 in the feeding speed change control by setting second feeding speed Wf2 to a negative value. This enables buckling of welding wire W1 to be prevented, and opening of the short-circuit between welding wire W1 and base material B1 to be promoted.

When welding wire W1 is made of a material having a relatively high resistance value (hereinafter referred to as a "high resistance material") such as mild steel or stainless steel, welding wire W1 has a relatively high resistance value, and thus welding wire W1 is likely to generate Joule heat when a welding current is applied to welding wire W1, and heat input is likely to enter welding wire W1. This causes the tip of welding wire W1 to be likely to be melted, so that buckling is less likely to occur in welding wire W1. Thus, when welding wire W1 is made of a high resistance material, welding wire W1 fed toward base material B 1 is preferably decelerated or stopped in the feeding speed change control by setting second feeding speed Wf2 to a positive value (a positive value smaller than first feeding speed Wf1) or zero. This enables the opening of the short-circuit between welding wire W1 and base material B1 to be effectively promoted.

In the above description, the short-circuit standby time may be set in accordance with at least one of a kind of material constituting welding wire W1 and feeding speed Wf (specifically, first feeding speed Wf1) of welding wire W1.

For example, the short-circuit standby time when welding wire W1 is made of a high-resistance material may be increased to more than the short-circuit standby time when welding wire W1 is made of a low-resistance material. Specifically, when welding wire W1 is made of a low-resistance material, the short-circuit standby time is preferably set to 100 psec or more and 1000 psec or less. When welding wire W1 is made of a high resistance material, the short-circuit standby time is preferably set to 100 psec or more and 3000 psec or less, and particularly preferably set to 2000 psec or more and 3000 psec or less in consideration of spatter reduction. When the short-circuit standby time is increased, preheating time for welding wire W1 increases, and thus a short-circuit opening current (welding current "iw" at the time of opening a short-circuit) can be reduced. For example, when the short-circuit standby time is changed from 100 psec to 2000 psec, the short-circuit opening current decreases from 300 A to 200 A. When the short-circuit opening current is reduced as described above, spatters can be reduced. When the short-circuit standby time is excessively increased, time from the start of the short-circuit to the opening of the short-circuit varies to cause welding to be unstable. Thus, the short-circuit standby time is preferably 3000 psec or less.

The short-circuit standby time may be shortened as feeding speed Wf (specifically, first feeding speed Wf1) of welding wire W1 increases. As feeding speed Wf of welding wire W1 increases, buckling of welding wire W1 due to contact between welding wire W1 and base material B1 is likely to occur. Thus, when the short-circuit standby time is shortened as feeding speed Wf of welding wire W1 increases, buckling of welding wire W1 can be prevented from occurring.

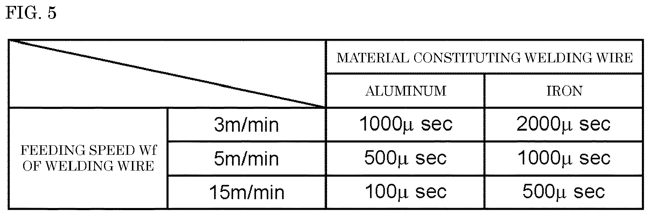

FIG. 5 illustrates short-circuit standby time in accordance with a kind of material constituting welding wire W1 and feeding speed Wf of welding wire W1. In the example of FIG. 5, when the material constituting welding wire W1 is "aluminum" and feeding speed Wf of welding wire W1 is "3 m/min", the short-circuit standby time is set to "1000 psec".

Although the feeding speed change control performed after predetermined time (e.g., the short-circuit standby time) elapses from a time point at which the short-circuit between welding wire W1 and base material B 1 is detected is described above as an example, the feeding speed change control may be performed immediately after the short-circuit between welding wire W1 and base material B 1 is detected. It is needless to say that the feeding speed change control is performed (started) before the short-circuit between welding wire W1 and base material B1 is opened. The feed control return control is preferably started at a time point at which opening of the short-circuit between welding wire W1 and base material B 1 is detected, immediately after the time point at which the opening of the short-circuit is detected, or near after the time point at which the opening of the short-circuit is detected.

The exemplary embodiments described above may be appropriately combined to be practiced. The exemplary embodiments described above are each an intrinsically preferable example, and are not intended to limit the technique disclosed herein, its application, or a range of its use.

### INDUSTRIAL APPLICABILITY

As described above, the technique disclosed herein is useful as an arc welding technique.

### REFERENCE MARKS IN THE DRAWINGS

1: arc welding system
W1: wire
B1: base material
S1: power source
10: arc welding device
11: power converter
12: welding current detector
13: welding voltage detector
14: controller
21: wire feeder
22: welding torch
30: setting unit
iw: welding current
Vw: welding voltage
Wf: feeding speed
Wf1: first feeding speed
Wf2: second feeding speed

## Claims

1. An arc welding method in which a welding wire serving as a consumable electrode is fed toward a base material, and a welding current is caused to flow through the welding wire and the base material to alternately repeat a reverse polarity period in which the welding wire serves as a positive electrode and the base material serves as a negative electrode, and a positive polarity period in which the welding wire serves as the negative electrode and the base material serves as the positive electrode, and thus generating an arc between the welding wire and the base material to weld the base material, the arc welding method comprising the steps of:
a) detecting a short-circuit between the welding wire and the base material; **characterized by**
c) increasing the welding current in absolute value after a predetermined short-circuit standby time elapses from a time point at which the short-circuit between the welding wire and the base material is detected in the step a);
b) after the step c) is started, changing a feeding speed of the welding wire from a first feeding speed to a second feeding speed on a negative side of the first feeding speed when a speed in a direction in which the welding wire is fed toward the base material is defined as positive; and
l) returning the feeding speed of the welding wire from the second feeding speed to the first feeding speed after the opening of the short-circuit between the welding wire and the base material is detected

2. The arc welding method according to claim 1, wherein
the step c) includes the steps of:
d) increasing the welding current in absolute value first at a first rate of current increase, being predetermined, after the short-circuit standby time elapses from a time point when the short-circuit between the welding wire and the base material is detected in the step a); and
e) increasing the welding current in absolute value second at a second rate of current increase, being lower than the first rate of current increase, after the step d), and
the step b) is performed after the step e).

3. The arc welding method according to claim 1 or 2, further comprising the steps of:
f) detecting a constriction having occurred in a droplet formed between the welding wire and the base material; and
g) reducing and controlling the welding current in absolute value after the step c) is started and the constriction is then detected in the step f).

4. The arc welding method according to claim 1 or 2, further comprising the steps of:
h) detecting an integrated power value obtained by integrating power supplied to the welding wire and the base material from a time point at which the short-circuit between the welding wire and the base material is detected in the step a); and
i) reducing and controlling the welding current in absolute value after the step c) is started and then the integrated power value derived in the step h) reaches a predetermined integrated power threshold.

5. The arc welding method according to claim 4, further comprising the step of
j) determining whether the integrated power value is greater than the predetermined threshold, wherein
the predetermined threshold is a fixed value.

6. The arc welding method according to claim 1, wherein the step b) is performed after a predetermined short-circuit standby time elapses from a time point at which the short-circuit between the welding wire and the base material is detected in the step a).

7. The arc welding method according to any one of claims 1 to 6, wherein the second feeding speed increases negatively as the first feeding speed increases positively.

8. The arc welding method according to any one of claims 1 to 7, wherein the second feeding speed is in a negative value when the step b) is performed in the reverse polarity period, and is zero or in a positive value when the step b) is performed in the positive polarity period.

9. The arc welding method according to any one of claims 1 to 7, wherein the second feeding speed is a first value when the step b) is performed in the reverse polarity period, and is a second value between the first feeding speed and the first value when the step b) is performed in the positive polarity period.

10. An arc welding device in which a welding wire serving as a consumable electrode is fed toward a base material by a wire feeder, and a welding current is caused to flow through the welding wire and the base material to alternately repeat a reverse polarity period in which the welding wire serves as a positive electrode and the base material serves as a negative electrode, and a positive polarity period in which the welding wire serves as the negative electrode and the base material serves as the positive electrode, and thus generating an arc between the welding wire and the base material to weld the base material, the arc welding device comprising:
a power converter that causes the welding current to flow through the welding wire and the base material; and
a controller that controls the wire feeder to change a feeding speed of the welding wire from a first feeding speed to a second feeding speed on a negative side of the first feeding speed when a speed in a direction in which the welding wire is fed toward the base material is defined as positive after detecting a short-circuit between the welding wire and the base material
**characterized in that**
the controller is further configured to perform operations of:
increasing the welding current in absolute value after a predetermined short-circuit standby time elapses from a time point at which the short-circuit between the welding wire and the base material is detected;
after the step of increasing the welding current is started, changing a feeding speed of the welding wire from a first feeding speed to a second feeding speed on a negative side of the first feeding speed when a speed in a direction in which the welding wire is fed toward the base material is defined as positive; and
returning the feeding speed of the welding wire from the second feeding speed to the first feeding speed after the opening of the short-circuit between the welding wire and the base material is detected.

11. The arc welding device according to claim 10, wherein
the controller further performs operations of
integrating power supplied to the welding wire after detecting the short-circuit of the welding wire to calculate an integrated power value, and determining whether the integrated power value is greater than a fixed threshold; and
controlling the power converter to reduce the welding current in absolute value after determining that the integrated power value is greater than the fixed threshold.

12. The arc welding device according to claim 10, wherein the second feeding speed is in a negative value when change from the first feeding speed to the second feeding speed is performed in the reverse polarity period, and is zero or in a positive value when the change from the first feeding speed to the second feeding speed is performed in the positive polarity period.

## Patentansprüche

1. Lichtbogenschweißverfahren, bei dem ein Schweißdraht, der als eine Verbrauchselektrode dient, einem Basismaterial zugeführt wird und ein Schweißstrom veranlasst wird, durch den Schweißdraht und das Basismaterial zu fließen, um abwechselnd eine Periode der umgekehrten Polarität, bei der der Schweißdraht als eine positive Elektrode dient und das Basismaterial als eine negative Elektrode dient, und eine Periode der positiven Polarität, bei der der Schweißdraht als die negative Elektrode dient und das Basismaterial als die positive Elektrode dient, zu wiederholen, wobei zwischen dem Schweißdraht und dem Basismaterial ein Lichtbogen erzeugt wird, um das Basismaterial zu schweißen, wobei das Lichtbogenschweißverfahren die folgenden Schritte umfasst:
a) Detektieren eines Kurzschlusses zwischen dem Schweißdraht und dem Basismaterial;
**gekennzeichnet durch**
c) Erhöhen des Schweißstroms in einem Absolutwert, nachdem ab einem Zeitpunkt, zu dem der Kurzschluss zwischen dem Schweißdraht und dem Basismaterial in Schritt a) detektiert wurde, eine vorbestimmte Kurzschlussstandbyzeit vergangen ist;
b) nachdem der Schritt c) gestartet wurde, Ändern einer Zuführgeschwindigkeit des Schweißdrahtes von einer ersten Zuführgeschwindigkeit in eine zweite Zuführgeschwindigkeit auf einer negativen Seite der ersten Zuführgeschwindigkeit, wenn eine Geschwindigkeit in eine Richtung, in die der Schweißdraht dem Basismaterial zugeführt wird, als positiv definiert ist; und
l) Zurücksetzen der Zuführgeschwindigkeit des Schweißdrahtes von der zweiten Zuführgeschwindigkeit auf die erste Zuführgeschwindigkeit, nachdem die Öffnung des Kurzschlusses zwischen dem Schweißdraht und dem Basismaterial detektiert wurde.

2. Lichtbogenschweißverfahren nach Anspruch 1, wobei
der Schritt c) die folgenden Schritte umfasst:
d) Erhöhen des Schweißstroms in einem Absolutwert als erstes mit einer ersten Rate der Stromerhöhung, die bestimmt wird, nachdem ab einem Zeitpunkt, als der Kurzschluss zwischen dem Schweißdraht und dem Basismaterial in Schritt a) detektiert wurde, eine vorbestimmte Kurzschlussstandbyzeit vergangen ist;
und
e) Erhöhen des Schweißstroms in einem Absolutwert als zweites mit einer zweiten Rate der Stromerhöhung, die niedriger ist als die erste Rate der Stromerhöhung, nach dem Schritt d), und
der Schritt b) nach dem Schritt e) durchgeführt wird.

3. Lichtbogenschweißverfahren nach Anspruch 1 oder 2, das ferner die folgenden Schritte umfasst:
f) Detektieren, dass in einem Tröpfchen, das zwischen dem Schweißdraht und dem Basismaterial gebildet ist, eine Konstriktion aufgetreten ist; und
g) Verringern und Steuern des Schweißstroms in einem Absolutwert, nachdem der Schritt c) gestartet wurde und dann in Schritt f) die Konstriktion detektiert wurde.

4. Lichtbogenschweißverfahren nach Anspruch 1 oder 2, das ferner die folgenden Schritte umfasst:
h) Detektieren eines integrierten Leistungswertes, der durch Integrieren von Leistung, die dem Schweißdraht und dem Basismaterial nach einem Zeitpunkt, zu dem der Kurzschluss zwischen dem Schweißdraht und dem Basismaterial im Schritt a) detektiert wurde, erhalten wird; und
i) Verringern und Steuern des Schweißstroms in einem Absolutwert, nachdem der Schritt c) gestartet wurde und dann der im Schritt h) abgeleitete integrierte Leistungswert einen vorbestimmten integrierten Leistungsschwellwert erreicht.

5. Lichtbogenschweißverfahren nach Anspruch 4, das ferner den folgenden Schritt umfasst:
j) Bestimmen, ob der integrierte Leistungswert größer ist als der vorbestimmte Schwellwert, wobei
der vorbestimmte Schwellwert ein fester Wert ist.

6. Lichtbogenschweißverfahren nach Anspruch 1, wobei der Schritt b) durchgeführt wird, nachdem ab einem Zeitpunkt, zu dem der Kurzschluss zwischen dem Schweißdraht und dem Basismaterial in Schritt a) detektiert wurde, eine vorbestimmte Kurzschlussstandbyzeit vergangen ist.

7. Lichtbogenschweißverfahren nach einem der Ansprüche 1 bis 6, wobei die zweite Zuführgeschwindigkeit negativ erhöht wird, wenn die erste Zuführgeschwindigkeit positiv erhöht wird.

8. Lichtbogenschweißverfahren nach einem der Ansprüche 1 bis 7, wobei die zweite Zuführgeschwindigkeit ein negativer Wert ist, wenn der Schritt b) in der Periode der umgekehrten Polarität durchgeführt wird, und null oder ein positiver Wert ist, wenn der Schritt b) in der Periode der positiven Polarität durchgeführt wird.

9. Lichtbogenschweißverfahren nach einem der Ansprüche 1 bis 7, wobei die zweite Zuführgeschwindigkeit ein erster Wert ist, wenn der Schritt b) in der Periode der umgekehrten Polarität durchgeführt wird, und ein zweiter Wert zwischen der ersten Zuführgeschwindigkeit und dem ersten Wert ist, wenn der Schritt b) in der Periode der positiven Polarität durchgeführt wird.

10. Lichtbogenschweißvorrichtung, bei der ein Schweißdraht, der als eine Verbrauchselektrode dient, von einem Drahtzuführer einem Basismaterial zugeführt wird und ein Schweißstrom veranlasst wird, durch den Schweißdraht und das Basismaterial zu fließen, um abwechselnd eine Periode der umgekehrten Polarität, bei der der Schweißdraht als eine positive Elektrode dient und das Basismaterial als eine negative Elektrode dient, und eine Periode der positiven Polarität, bei der der Schweißdraht als die negative Elektrode dient und das Basismaterial als die positive Elektrode dient, zu wiederholen, wobei zwischen dem Schweißdraht und dem Basismaterial ein Lichtbogen erzeugt wird, um das Basismaterial zu schweißen, wobei die Lichtbogenschweißvorrichtung Folgendes umfasst:
einen Leistungswandler, der den Schweißstrom veranlasst, durch den Schweißdraht und das Basismaterial zu fließen; und
eine Steuerung, die den Drahtzuführer zum Ändern einer Zuführgeschwindigkeit des Schweißdrahtes von einer ersten Zuführgeschwindigkeit in eine zweite Zuführgeschwindigkeit auf einer negativen Seite der ersten Zuführgeschwindigkeit steuert, wenn eine Geschwindigkeit in eine Richtung, in die der Schweißdraht dem Basismaterial zugeführt wird, als positiv definiert ist, nach Detektieren eines Kurzschlusses zwischen dem Schweißdraht und dem Basismaterial
**dadurch gekennzeichnet, dass**
die Steuerung ferner dazu ausgelegt ist, die folgenden Operationen durchzuführen:
Erhöhen des Schweißstroms in einem Absolutwert, nachdem ab einem Zeitpunkt, zu dem der Kurzschluss zwischen dem Schweißdraht und dem Basismaterial detektiert wurde, eine vorbestimmte Kurzschlussstandbyzeit vergangen ist;
nachdem der Schritt zum Erhöhen des Schweißstroms gestartet wurde, Ändern einer Zuführgeschwindigkeit des Schweißdrahtes von einer ersten Zuführgeschwindigkeit in eine zweite Zuführgeschwindigkeit auf einer negativen Seite der ersten Zuführgeschwindigkeit, wenn eine Geschwindigkeit in eine Richtung, in die der Schweißdraht dem Basismaterial zugeführt wird, als positiv definiert ist; und
Zurücksetzen der Zuführgeschwindigkeit des Schweißdrahtes von der zweiten Zuführgeschwindigkeit auf die erste Zuführgeschwindigkeit, nachdem die Öffnung des Kurzschlusses zwischen dem Schweißdraht und dem Basismaterial detektiert wurde.

11. Lichtbogenschweißvorrichtung nach Anspruch 10, wobei
die Steuerung ferner die folgenden Operationen durchführt:
Integrieren einer Leistung, die dem Schweißdraht zugeführt wird, nach Detektieren des Kurzschlusses des Schweißdrahts, um einen integrierten Leistungswert zu berechnen, und Bestimmen, dass der integrierte Leistungswert größer ist als ein fester Schwellwert; und
Steuern des Leistungswandlers zum Verringern des Schweißstroms in einem Absolutwert nach Bestimmen, dass der integrierte Leistungswert größer ist als der feste Schwellwert.

12. Lichtbogenschweißvorrichtung nach Anspruch 10, wobei die zweite Zuführgeschwindigkeit ein negativer Wert ist, wenn eine Änderung von der ersten Zuführgeschwindigkeit in die zweite Zuführgeschwindigkeit in der Periode der umgekehrten Polarität durchgeführt wird, und null oder ein positiver Wert ist, wenn die Änderung von der ersten Zuführgeschwindigkeit in die zweite Zuführgeschwindigkeit in der Periode der positiven Polarität durchgeführt wird.

## Revendications

1. Procédé de soudage à l'arc dans lequel un fil de soudage servant d'électrode consommable est acheminé vers un matériau de base, et un courant de soudage est amené à circuler à travers le fil de soudage et le matériau de base pour répéter alternativement une période de polarité inverse dans laquelle le fil de soudage sert d'électrode positive et le matériau de base sert d'électrode négative, et une période de polarité positive dans laquelle le fil de soudage sert d'électrode négative et le matériau de base sert d'électrode positive, et générant ainsi un arc entre le fil de soudage et le matériau de base pour souder le matériau de base, le procédé de soudage à l'arc comprenant les étapes suivantes :
a) détecter un court-circuit entre le fil de soudage et le matériau de base ;
**caractérisé par** ce qui suit
c) augmenter le courant de soudage en valeur absolue après l'écoulement d'un temps d'attente de court-circuit prédéterminé à partir d'un moment où le court-circuit entre le fil de soudage et le matériau de base a été détecté à l'étape a) ;
b) après que l'étape c) a commencé, faire passer une vitesse d'alimentation en fil de soudage d'une première vitesse d'alimentation à une deuxième vitesse d'alimentation sur un côté négatif de la première vitesse d'alimentation lorsqu'une vitesse dans une direction dans laquelle le fil de soudage est acheminé vers le matériau de base est définie comme positive ; et
l) ramener la vitesse d'alimentation en fil de soudage de la deuxième vitesse d'alimentation à la première vitesse d'alimentation après que l'ouverture du court-circuit entre le fil de soudage et le matériau de base a été détectée.

2. Procédé de soudage à l'arc selon la revendication 1, dans lequel
l'étape c) comporte les étapes suivantes :
d) en premier lieu, augmenter le courant de soudage en valeur absolue à un premier taux d'augmentation de courant qui est prédéterminé après l'écoulement du temps d'attente de court-circuit à partir d'un moment où le court-circuit entre le fil de soudage et le matériau de base a été détecté à l'étape a) ; et
e) en second lieu, augmenter le courant de soudage en valeur absolue à un deuxième taux d'augmentation de courant qui est inférieur au premier taux d'augmentation de courant, après l'étape d), et
l'étape b) est réalisée après l'étape e).

3. Procédé de soudage à l'arc selon la revendication 1 ou 2, comprenant en outre les étapes suivantes :
f) détecter une constriction qui s'est produite dans une gouttelette formée entre le fil de soudage et le matériau de base ; et
g) réduire et commander le courant de soudage en valeur absolue après que l'étape c) a commencé, et la constriction est alors détectée à l'étape f).

4. Procédé de soudage à l'arc selon la revendication 1 ou 2, comprenant en outre les étapes suivantes :
h) détecter une valeur de puissance intégrée obtenue en intégrant une puissance fournie au fil de soudage et au matériau de base à partir d'un moment où le court-circuit entre le fil de soudage et le matériau de base a été détecté à l'étape a) ; et
i) réduire et commander le courant de soudage en valeur absolue après que l'étape c) a commencé, et la valeur de puissance intégrée dérivée à l'étape h) atteint ensuite un seuil de puissance intégrée prédéterminé.

5. Procédé de soudage à l'arc selon la revendication 4, comprenant en outre l'étape suivante :
j) déterminer si la valeur de puissance intégrée est supérieure au seuil prédéterminé, dans lequel
le seuil prédéterminé est une valeur fixée.

6. Procédé de soudage à l'arc selon la revendication 1, dans lequel l'étape b) est réalisée après l'écoulement d'un temps d'attente de court-circuit prédéterminé à partir d'un moment où le court-circuit entre le fil de soudage et le matériau de base a été détecté à l'étape a).

7. Procédé de soudage à l'arc selon l'une des revendications 1 à 6, dans lequel la deuxième vitesse d'alimentation augmente négativement à mesure que la première vitesse d'alimentation augmente positivement.

8. Procédé de soudage à l'arc selon l'une des revendications 1 à 7, dans lequel la deuxième vitesse d'alimentation a une valeur négative lorsque l'étape b) est réalisée dans la période de polarité inverse, et est nulle ou a une valeur positive lorsque l'étape b) est réalisée dans la période de polarité positive.

9. Procédé de soudage à l'arc selon l'une des revendications 1 à 7, dans lequel la deuxième vitesse d'alimentation a une première valeur lorsque l'étape b) est réalisée dans la période de polarité inverse, et a une deuxième valeur entre la première vitesse d'alimentation et la première valeur lorsque l'étape b) est réalisée dans la période de polarité positive.

10. Dispositif de soudage à l'arc dans lequel un fil de soudage servant d'électrode consommable est acheminé vers un matériau de base par un dévidoir, un courant de soudage est amené à circuler à travers le fil de soudage et le matériau de base pour répéter alternativement une période de polarité inverse dans laquelle le fil de soudage sert d'électrode positive et le matériau de base sert d'électrode négative, et une période de polarité positive dans laquelle le fil de soudage sert d'électrode négative et le matériau de base sert d'électrode positive, et générant ainsi un arc entre le fil de soudage et le matériau de base pour souder le matériau de base, le dispositif de soudage à l'arc comprenant :
un convertisseur de puissance qui amène le courant de soudage à circuler à travers le fil de soudage et le matériau de base ; et
un dispositif de commande qui commande le dévidoir pour faire passer une vitesse d'alimentation du fil de soudage d'une première vitesse d'alimentation à une deuxième vitesse d'alimentation sur un côté négatif de la première vitesse d'alimentation lorsqu'une vitesse dans une direction dans laquelle le fil de soudage est acheminé vers le matériau de base est définie comme positive après la détection d'un court-circuit entre le fil de soudage et le matériau de base,
**caractérisé en ce que**
le dispositif de commande est en outre configuré pour réaliser les opérations suivantes :
augmenter le courant de soudage en valeur absolue après l'écoulement d'un temps d'attente de court-circuit prédéterminé à partir d'un moment où le court-circuit entre le fil de soudage et le matériau de base a été détecté ;
après que l'étape d'augmentation du courant de soudage a commencé, faire passer une vitesse d'alimentation du fil de soudage d'une première vitesse d'alimentation à une deuxième vitesse d'alimentation sur un côté négatif de la première vitesse d'alimentation lorsqu'une vitesse dans une direction dans laquelle le fil de soudage est acheminé vers le matériau de base est définie comme positive ; et
ramener la vitesse d'alimentation du fil de soudage de la deuxième vitesse d'alimentation à la première vitesse d'alimentation après que l'ouverture du court-circuit entre le fil de soudage et le matériau de base a été détectée.

11. Dispositif de soudage à l'arc selon la revendication 10, dans lequel
le dispositif de commande réalise en outre les opérations suivantes :
intégrer une puissance fournie au fil de soudage après avoir détecté le court-circuit du fil de soudage pour calculer une valeur de puissance intégrée, et déterminer si la valeur de puissance intégrée est supérieure à un seuil fixé ; et
commander le convertisseur de puissance pour réduire le courant de soudage en valeur absolue après avoir déterminé que la valeur de puissance intégrée est supérieure au seuil fixé.

12. Dispositif de soudage à l'arc selon la revendication 10, dans lequel la deuxième vitesse d'alimentation a une valeur négative lorsque le passage de la première vitesse d'alimentation à la deuxième vitesse d'alimentation est réalisé dans la période de polarité inverse, et est nulle ou a une valeur positive lorsque le passage de la première vitesse d'alimentation à la deuxième vitesse d'alimentation est réalisé dans la période de polarité positive.
